# EUROPEAN PATENT APPLICATION

(11) **EP 4 336 111 A1**
(43) Date of publication of application: **13.03.2024**
(21) Application number: 22832669.0
(22) Date of filing: 27.05.2022
(51) Int. Cl.: F24F 7/08, F24F 3/044

(54) **VENTILATION DEVICE**

(30) Priority: 29.06.2021 JP 2021107674
(71) Applicant: Daikin Industries, Ltd., Osaka-shi, Osaka 530-0001 (JP)
(72) Inventor: IKEBE, Masanori, Osaka-shi, Osaka 530-0001 (JP); SUZUKI, Yuya, Osaka-shi, Osaka 530-0001 (JP)
(74) Representative: Hoffmann Eitle
(86) International application number: PCT/JP2022/021807
(87) International publication number: WO 2023/276511

(57) **Abstract**

A first heat exchanger (21) and a second heat exchanger (25) are arranged in a first direction along a first surface (12b) that is a lower surface of a casing (12). The first heat exchanger (21) overlaps with the second heat exchanger (25) when viewed in the first direction.

## Description

### TECHNICAL FIELD

The present disclosure relates to a ventilation device.

### BACKGROUND ART

A ventilation device disclosed in Patent Document 1 is a floorstanding ventilation device. The ventilation device includes a casing, a heat exchange element (first heat exchanger), and a cooling/heating coil (second heat exchanger). The casing is formed in the shape of a vertically long box. The heat exchange element is disposed above the cooling/heating coil.

### CITATION LIST

### PATENT DOCUMENT

Patent Document 1: Japanese Unexamined Patent Publication No. H09-189429

### SUMMARY OF THE INVENTION

### TECHNICAL PROBLEM

A ventilation device that includes a first heat exchanger and a second heat exchanger may be installed in a space such as the ceiling space. In this case, the ventilation device desirably has a smaller height in the top-to-bottom direction.

It is an object of the present disclosure to reduce the height of a ventilation device.

### SOLUTION TO THE PROBLEM

A ventilation device of a first aspect includes: a casing (12) having an air supply path (13) through which outdoor air is supplied into a room, and an exhaust path (14) through which room air is exhausted to an outside of the room; a first heat exchanger (21) configured to allow heat exchange between air flowing through the air supply path (13) and air flowing through the exhaust path (14); and a second heat exchanger (25) disposed downstream of the first heat exchanger (21) in the air supply path (13), the first and second heat exchangers (21) and (25) being arranged in a first direction along a first surface (12b), the first surface (12b) being a lower surface of the casing (12), the first heat exchanger (21) overlapping with the second heat exchanger (25) when viewed in the first direction.

According to the first aspect, the first and second heat exchangers (21) and (25) are arranged in the first direction along the lower surface of the casing (12). The first and second heat exchangers (21) and (25) overlap with each other when viewed in the first direction. This can shorten the height of the casing (12).

A second aspect is an embodiment of the first aspect. In the second aspect, the first surface (12b) has an inside air inlet (o4) through which the room air is introduced into the exhaust path (14), the first heat exchanger (21) has an exhaust inflow surface (21d) through which air in the exhaust path (14) flows in, and the exhaust inflow surface (21d) is located along the inside air inlet (o4).

According to the second aspect, the first surface (12b), which is the lower surface of the casing (12), has the inside air inlet (o4). The exhaust inflow surface (21d) of the first heat exchanger (21) is located along the inside air inlet (o4). This can shorten the flow path of air from the inside air inlet (o4) to the exhaust inflow surface (21d). This can shorten the height of the casing (12).

A third aspect is an embodiment of the first or second aspect. In the third aspect, the first heat exchanger (21) has an air supply outflow surface (21c) through which air in the air supply path (13) flows out, the second heat exchanger (25) has an inflow surface (25b) into which air flows, and the air supply outflow surface (21c) faces the inflow surface (25b).

If the air supply outflow surface (21c) of the first heat exchanger (21) does not face the inflow surface (25b) of the second heat exchanger (25), an uneven flow of air may occur in the inflow surface (25b) of the second heat exchanger (25). This is because the air flow may be unevenly distributed on the inlet side of the second heat exchanger (25). Specifically, for example, if an air supply fan is located on the inlet side of the second heat exchanger (25), and the air outlet of the air supply fan overlaps with a part of the inflow surface (25b) of the second heat exchanger (25), a larger amount of air flows through this part, whereas a smaller amount of air flows through the other part. On the other hand, according to the third aspect, the air supply outflow surface (21c) of the first heat exchanger (21) overlaps with the inflow surface (25b) of the second heat exchanger (25). The first heat exchanger (21) is designed to prevent an uneven flow of air, and the air tends to flow out from the air supply outflow surface (21c) equally. This can reduce an uneven flow of air in the inflow surface (25b) of the first heat exchanger (21).

A fourth aspect is an embodiment of any one of the first to third aspects. In the fourth aspect, when viewed from a second direction perpendicular to the air supply outflow surface (21c), the air supply outflow surface (21c) and the inflow surface (25b) overlap with each other with a space therebetween.

According to the fourth aspect, the air supply outflow surface (21c) and the inflow surface (25b) overlap with each other in the second direction perpendicular to the air supply outflow surface (21c). Thus, the air relatively equally flowing out of the air supply outflow surface (21c) of the first heat exchanger (21) can be delivered directly to the inflow surface (25b) of the second heat exchanger (25). This can reduce an uneven flow of air in the inflow surface (25b) of the first heat exchanger (21).

A fifth aspect is an embodiment of the fourth aspect. In the fifth aspect, when viewed from the second direction, an area where a projected surface of the air supply outflow surface (21c) and a projected surface of the inflow surface (25b) overlap with each other is 1/2 or more of an area of the air supply outflow surface (21c).

According to the fifth aspect, a half or more area of the air supply outflow surface (21c) overlaps with the inflow surface (25b) when viewed in the second direction. This facilitates delivering, to the inflow surface (25b), the air relatively equally flowing out of the air supply outflow surface (21c) of the first heat exchanger (21) as it is. This can reduce an uneven flow of air in the inflow surface (25b) of the first heat exchanger (21).

A sixth aspect is an embodiment of any one of the first to fifth aspects. In the sixth aspect, when viewed in the first direction, a height ha of a portion where the first and second heat exchangers (21) and (25) overlap with each other is 60% or more of a height h1 of the first heat exchanger (21).

According to the sixth aspect, large portions of the first and second heat exchangers (21) and (25) in the height direction overlap with each other. This can shorten the height of the casing (12).

A seventh aspect is an embodiment of any one of the first to sixth aspect. In the seventh aspect, the inflow surface (25b) has a larger area than the air supply outflow surface (21c) does.

According to the seventh aspect, the flow path cross-sectional area of the air supply path (13) can be kept from decreasing in the second heat exchanger (25). It is thus possible to keep the pressure loss in the air supply path (13) from increasing due to a smaller flow path cross-sectional area in the second heat exchanger (25).

An eighth aspect is an embodiment of any one of the first to seventh aspects. In the eighth aspect, the casing (12) has an outside air inlet (o1) through which the outdoor air is introduced into the air supply path (13), and the air supply path (13) extends linearly in the first direction through the outside air inlet (o1), the first heat exchanger (21), and the second heat exchanger (25).

The air supply path (13) of the eighth aspect includes a flow path that extends linearly in the first direction through the outside air inlet (o1), the first heat exchanger (21), and the second heat exchanger (25). This can reduce a change in the direction of air flow in the air supply path (13) and can keep the pressure loss in the air supply path (13) from increasing.

A ninth aspect is an embodiment of the eighth aspect. The ventilation device of the ninth aspect further includes: an air supply fan (22) configured to transfer air in the air supply path (13), wherein the air supply path (13) extends linearly in the first direction through the outside air inlet (o1), the first heat exchanger (21), the second heat exchanger (25), and the air supply fan (22).

The air supply path (13) of the ninth aspect includes a flow path that extends linearly in the first direction through the outside air inlet (o1), the first heat exchanger (21), the second heat exchanger (25), and the air supply fan (22). This can reduce a change in the direction of air flow in the air supply path (13) and can keep the pressure loss in the air supply path (13) from increasing.

The air supply fan (22) is located downstream of the second heat exchanger (25). This can reduce an uneven flow of air into the second heat exchanger (25), compared to the configuration in which the air supply fan (22) sends the air toward the inflow surface (25b) of the second heat exchanger (25).

A tenth aspect is an embodiment of the ninth aspect. In the tenth aspect, the casing (12) has an air supply port (o3) through which air in the air supply path (13) is supplied to an indoor space (5), and the air supply path (13) extends linearly in the first direction through the outside air inlet (o1), the first heat exchanger (21), the second heat exchanger (25), the air supply fan (22), and the air supply port (o3).

The air supply path (13) of the tenth aspect includes a flow path that extends linearly in the first direction through the outside air inlet (o1), the first heat exchanger (21), the second heat exchanger (25), the air supply fan (22), and the air supply port (o3). This can reduce a change in the direction of air flow in the air supply path (13) and can keep the pressure loss in the air supply path (13) from increasing.

An eleventh aspect is an embodiment of any one of the first to tenth aspects. The ventilation device of the eleventh aspect further includes: an exhaust fan (23) configured to transfer air in the exhaust path (14), wherein the exhaust fan (23) overlaps with the second heat exchanger (25) when viewed in the first direction.

According to the eleventh aspect, the exhaust fan (23) and the second heat exchanger (25) overlap with each other when viewed in the first direction. This can reduce the height of the casing (12).

### BRIEF DESCRIPTION OF THE DRAWINGS

FIG. 1 illustrates a general configuration of a building including a ventilation device according to a first embodiment.
FIG. 2 illustrates a general configuration of a refrigerant circuit of the ventilation device.
FIG. 3 is a perspective view illustrating the appearance of the ventilation device.
FIG. 4 is a cross section taken along line IV-IV shown in FIG. 3 and viewed in the direction of arrows.
FIG. 5 is a cross section taken along line V-V shown in FIG. 4 and viewed in the direction of arrows.
FIG. 6 is a bottom view of the ventilation device.
FIG. 7 is a front view of the inflow surface of a utilization heat exchanger as viewed from the front.

### DESCRIPTION OF EMBODIMENTS

### «Embodiments»

Embodiments of the present disclosure will be described in detail below with reference to the drawings. The present disclosure is not limited to the embodiments shown below, and various changes can be made within the scope without departing from the technical concept of the present disclosure. Since each of the drawings is intended to illustrate the present disclosure conceptually, dimensions, ratios, or numbers may be exaggerated or simplified as necessary for the sake of ease of understanding.

### (1) Outline of Ventilation Device

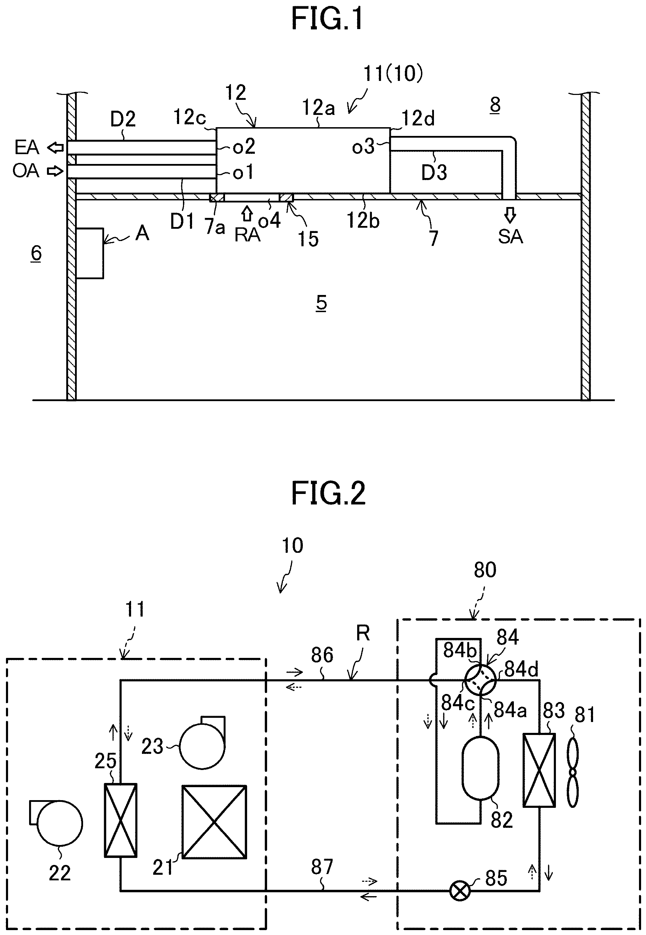

A ventilation device (10) of the present disclosure ventilates an indoor space (5). As illustrated in FIG. 1, the ventilation device (10) ventilates the indoor space (5) in a building, such as an ordinary house. The ventilation device (10) supplies outdoor air (OA) in an outdoor space (6), as supply air (SA), into a room. At the same time, the ventilation device (10) exhausts room air (RA) in the indoor space (5), as exhaust air (EA), to the outside of the room. The "indoor space" as used herein includes a habitable room, such as a living room, and a nonhabitable room, such as a corridor. The ventilation device (10) adjusts the temperature of air in the indoor space (5). The ventilation device (10) performs a cooling operation and a heating operation.

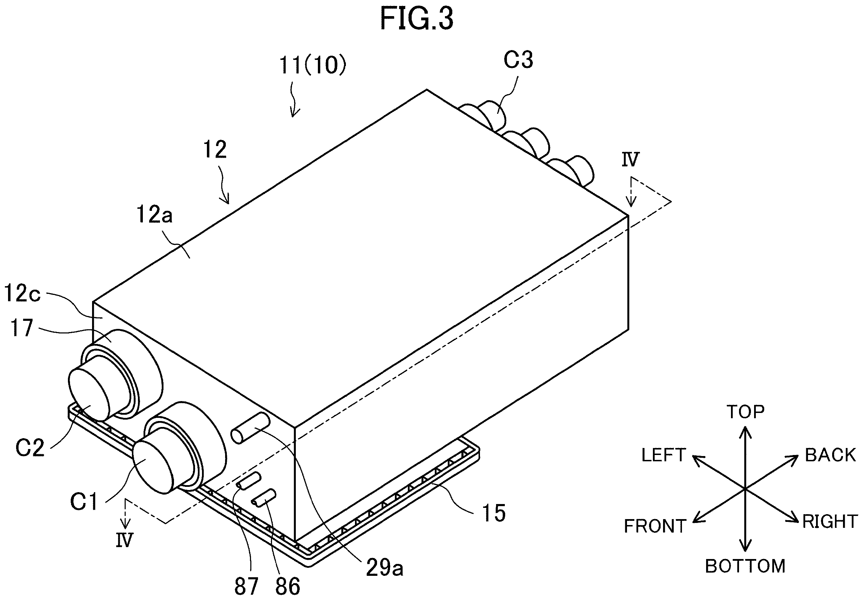

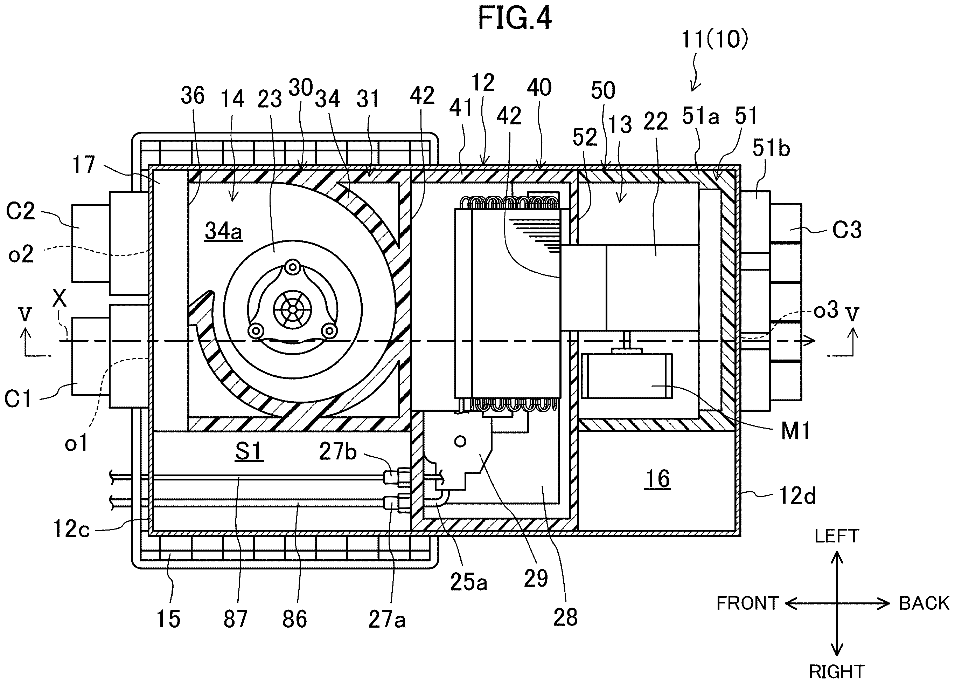

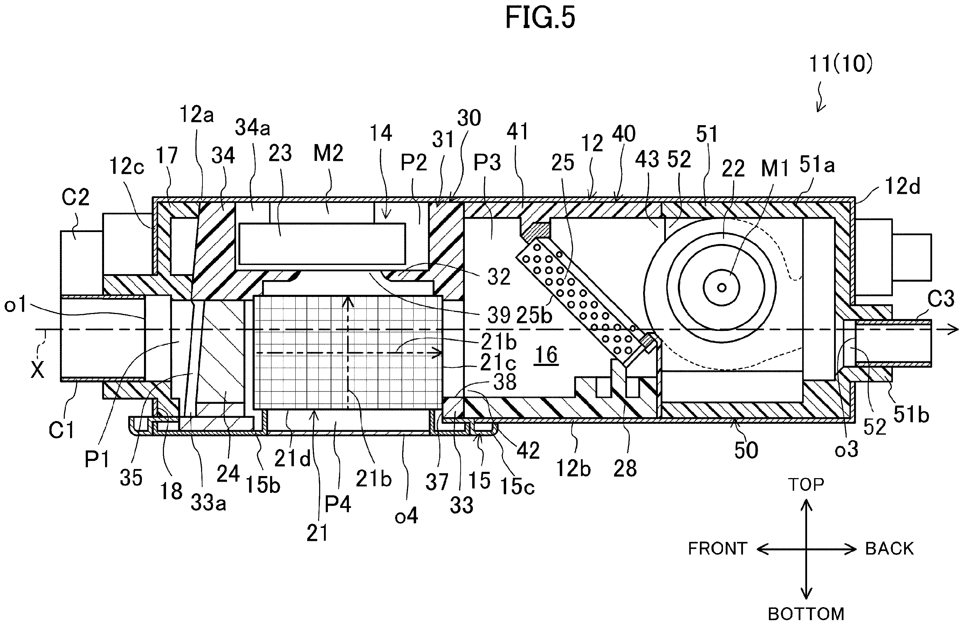

The ventilation device (10) has a ventilation unit (11). The ventilation unit (11) is disposed in a ceiling space (8) behind the ceiling (7). The ventilation unit (11) of this example is a horizontal ventilation unit. As illustrated in FIG. 3, the ventilation unit (11) includes a casing (12). The ventilation unit (11) is positioned such that the longitudinal direction of the casing (12) corresponds to a substantially horizontal direction. As illustrated in FIGS. 4 and 5, the casing (12) has an air supply path (13) and an exhaust path (14). The air supply path (13) is a flow path through which outdoor air (OA) is supplied into the room. The exhaust path (14) is a flow path through which room air (RA) is exhausted to the outside of the room. The ventilation unit (11) includes an air supply fan (22), an exhaust fan (23), a total heat exchanger (21), and a utilization heat exchanger (25).

As illustrated in FIG. 2, the ventilation device (10) includes a heat source unit (80). The heat source unit (80) and the utilization heat exchanger (25) are connected together through a first connection pipe (86) and a second connection pipe (87). Such connection of the pipes forms a refrigerant circuit (R). The refrigerant circuit (R) is filled with a refrigerant. The refrigerant corresponds to a heating medium of the present disclosure. The refrigerant is, for example, R32 (difluoromethane). The refrigerant circulates in the refrigerant circuit (R) to perform a refrigeration cycle. The first connection pipe (86) is a gas-side connection pipe. The second connection pipe (87) is a liquid-side connection pipe.

### (2) Duct

As illustrated in FIG. 1, the ventilation unit (11) is connected to an outside air duct (D1), an exhaust duct (D2), and air supply ducts (D3). The inlet end of the outside air duct (D1) communicates with the outdoor space (6). The outlet end of the outside air duct (D1) is joined to the inlet end of the air supply path (13). The inlet end of the exhaust duct (D2) is joined to the outlet end of the exhaust path (14). The outlet end of the exhaust duct (D2) communicates with the outdoor space (6). The inlet ends of the air supply ducts (D3) are joined to the outlet end of the air supply path (13). The outlet ends of the air supply ducts (D3) communicate with the indoor space (5).

### (3) Detailed Structure of Ventilation Unit

The ventilation unit (11) includes the casing (12), first to third containers (31, 41, 51), the total heat exchanger (21), a filter (24), the air supply fan (22), the exhaust fan (23), the utilization heat exchanger (25), refrigerant pipe joints (27), a drain pan (28), and a pump (29).

The terms "top," "bottom," "left," "right," "front," and "back" in the following description refer to the directions when the ventilation unit (11) is viewed from the front, as illustrated in FIGS. 3 to 5. The front surface of the ventilation unit (11) is a side surface provided with a first duct joint (C1) and a second duct joint (C2), which will be described later.

### (3-1) Casing

The casing (12) is disposed in the ceiling space (8). As illustrated in FIGS. 1 and 3 to 5, the casing (12) has a rectangular parallelepiped shape. The casing (12) extends in the front-to-back direction along the ceiling (7). In this example, the longitudinal direction of the casing (12) corresponds to the front-to-back direction. The casing (12) has the shape of a hollow box. In other words, the casing (12) has therein an internal space (16). The casing (12) has a top plate (12a), a bottom plate (12b), and four side plates. The four side plates include a first side plate (12c) and a second side plate (12d) facing each other.

The top plate (12a) forms an upper surface of the casing (12). The bottom plate (12b) forms a lower surface of the casing (12). The top plate (12a) and the bottom plate face each other. The first side plate (12c) forms a front side surface of the casing (12) in the front-to-back direction (on one end in the longitudinal direction). The second side plate (12d) forms a back side surface of the casing (12) in the front-to-back direction (on the other end in the longitudinal direction). The top plate (12a) and the bottom plate (12b) extend substantially horizontally. The first side plate (12c) and the second side plate (12d) extend substantially vertically.

The first side plate (12c) is provided with the first and second duct joints (C1) and (C2) via a duct fixing member (17). The duct fixing member (17) is disposed at a front end portion in the casing (12). The duct fixing member (17) includes a body portion having a rectangular parallelepiped shape, and two tubular portions protruding forward from the front side surface of the body portion. The first and second duct joints (C1) and (C2) are each disposed inside an associated one of the tubular portions.

The first and second duct joints (C1) and (C2) are tubular. The first and second duct joints (C1) and (C2) protrude forward (laterally) from the outer surface of the first side plate (12c). In this example, the number of the first duct joint (C1) is one, and the number of the second duct joint (C2) is one. The outlet end of the outside air duct (D1) is connected to the first duct joint (C1). The inlet end of the exhaust duct (D2) is connected to the second duct joint (C2).

As illustrated in FIG. 4, the first duct connecting port (C1) has therein an outside air inlet (o1). The second duct connecting port (c2) has therein an air outlet (o2). The outside air inlet (o1) is an opening through which outdoor air is introduced into the air supply path (13). The air outlet (o2) is an opening through which air in the exhaust path (14) is exhausted to the outside of the room. The outside air inlet (o1) is closer to an intermediate portion of the first side plate (12c) in the right-to-left direction than the air outlet (o2) is.

The second side plate (12d) is provided with third duct joints (C3). The third duct joints (C3) are tubular. The third duct joints (C3) protrude backward (laterally) from the outer surface of the second side plate (12d). In this example, the number of the third duct joints (C3) is five. The third duct joints (C3) are each connected to the inlet end of an associated one of the air supply ducts (D3). Note that FIG. 1 illustrates only one of the air supply ducts (D3) for the sake of convenience.

As illustrated in FIG. 4, the third joints (C3) each have therein an air supply port (o3). The air supply port (o3) is an opening through which air in the air supply path (13) is supplied to the indoor space (5).

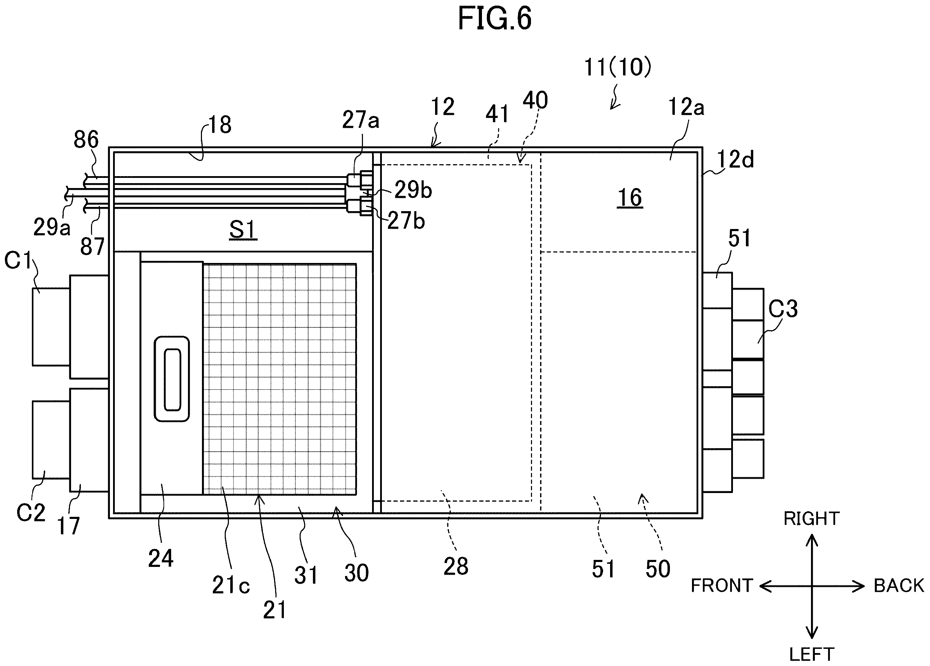

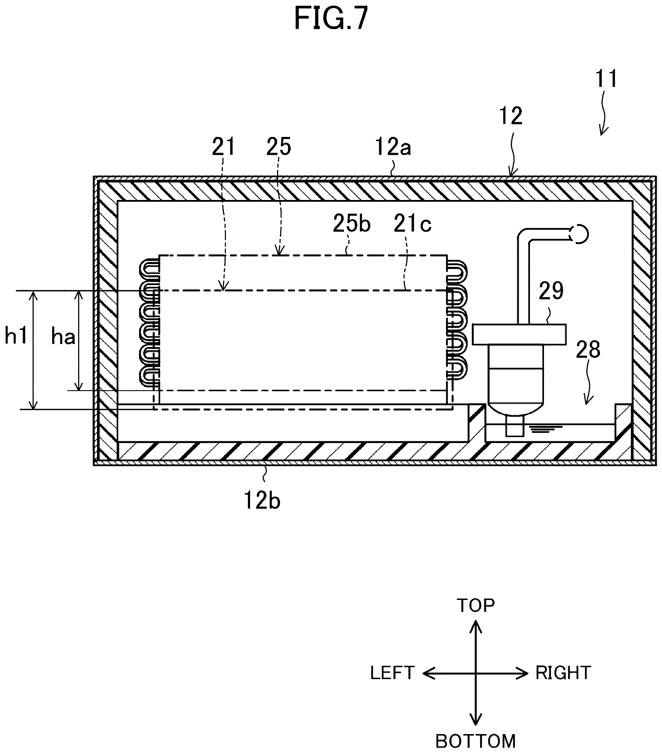

As illustrated in FIG. 7, a front portion of the lower surface of the casing (12) has an access hole (18). The access hole (18) communicates with the internal space (16) of the casing (12). As illustrated in FIGS. 5 and 6, an indoor panel (15) is provided below the access hole (18).

The indoor panel (15) covers the access hole (18). As schematically illustrated in FIG. 1, the indoor panel (15) is provided inside a ceiling opening (7a) that passes through the ceiling (7). The indoor panel (15) faces the indoor space (5). The indoor panel (15) is fixed to the casing (12) with fastening members (e.g., bolts). The indoor panel (15) includes a flat plate part (15b) and a frame part (15c). The flat plate part (15b) closes the access hole (18). The frame part (15c) is a frame surrounding the flat plate part (15b). The indoor panel (15) is removable.

The flat plate part (15b) of the indoor panel (15) has an inside air inlet (15a). The inside air inlet (15a) is included in the access hole (18). In other words, a portion of the access hole (18) forms an inlet. The inside air inlet (15a) sucks room air. The inside air inlet (15a) allows the indoor space (5) and the inlet end of the exhaust path (14) to communicate with each other.

### (3-2) First Container

A first container (31) is disposed in a front portion of the casing (12). The first container (31) is disposed above the access hole (18). The first container (31) is made of styrene foam. The first container (31) has a rectangular parallelepiped shape. The first container (31) is open on its upper and lower sides. The first container (31) includes a partitioning portion (32), a total heat exchanger containing portion (33), and a housing portion (34).

As illustrated in FIG. 5, the partitioning portion (32) is a plate-shaped portion above the center of the first container (31) in the top-to-bottom direction. The partitioning portion (32) partitions the space defined in the casing (12) by the first container (31) into a total heat exchanger-containing space (33a) and a fan-containing space (34a).

The total heat exchanger-containing space (33a) is formed below the partitioning portion (32). The total heat exchanger-containing space (33a) is surrounded by the total heat exchanger containing portion (33) and the indoor panel (15). The total heat exchanger containing portion (33) has a box shape. The total heat exchanger (21) and the filter (24) are disposed in the total heat exchanger-containing space (33a).

The fan-containing space (34a) is formed above the partitioning portion (32). The fan-containing space (34a) is surrounded by the housing portion (34) and the top plate (12a) of the casing (12). As illustrated in FIG. 4, the housing portion (34) has an arc shape to surround the exhaust fan (23). The housing portion (34) extends upward from the partitioning portion (32). The exhaust fan (23) is disposed in the fan-containing space (34a).

The front side surface of the first container (31) has a first inflow port (35) and a first outflow port (36), which are substantially rectangular. The first inflow port (35) communicates with the total heat exchanger-containing space (33a). The first inflow port (35) communicates with the first duct joint (C1) via the duct fixing member (17). A flow path from the outlet end of the first duct joint (C1) via the first inflow port (35) to the front side surface of the total heat exchanger (21) forms a first flow path (P1). The first flow path (P1) forms a portion of the air supply path (13) located upstream of the total heat exchanger (21).

The first outflow port (36) communicates with the fan-containing space (34a). The first outflow port (36) communicates with the second duct joint (C2) via the duct fixing member (17). The partitioning portion (32) has a substantially circular communication port (39). The communication port (39) is formed above the total heat exchanger (21). The communication port (39) allows the total heat exchanger-containing space (33a) and the fan-containing space (34a) to communicate with each other.

A flow path from the outlet end of the second duct joint (C2) via the first outflow port (36) and the communication port (39) to the upper surface of the total heat exchanger (21) forms a second flow path (P2). The second flow path (P2) forms a portion of the exhaust path (14) located downstream of the total heat exchanger (21).

The back side surface of the first container (31) has a substantially rectangular second outflow port (38). The second outflow port (38) communicates with the total heat exchanger-containing space (33a). A flow path from the back side surface of the total heat exchanger (21) via the second outflow port (38) to the inlet ends of the third duct joints (C3) forms a third flow path (P3). The third flow path (P3) forms a portion of the air supply path (13) located downstream of the total heat exchanger (21).

The lower side of the first container (31) has a substantially rectangular second inflow port (37). The second inflow port (37) communicates with the total heat exchanger-containing space (33a). The second inflow port (37) is formed above the access hole (18) of the casing (12). A flow path from the inside air inlet (15a) of the indoor panel (15) via the second inflow port (37) to the lower surface of the total heat exchanger (21) forms a fourth flow path (P4). The fourth flow path (P4) forms a portion of the exhaust path (14) located upstream of the total heat exchanger (21).

### (3-3) Second Container

A second container (41) is housed in the casing (12). The second container (41) is located behind and adjacent to the first container (31). The second container (41) is disposed in a central portion of the casing (12). The second container (41) is made of resin.

The second container (41) has a rectangular parallelepiped shape. The second container (41) is disposed in the casing (12) such that its longitudinal direction corresponds to the right-to-left direction. The second container (41) has a greater length in the right-to-left direction than the first container (31) does. The second container (41) has generally the same length in the right-to-left direction as that of the internal space (16) of the casing (12). In other words, the length of the casing (12) in the right-to-left direction is determined based on the length of the second container (41) in the right-to-left direction. The second container (41) has an open lower surface. The second container (41) includes therein the utilization heat exchanger (25) and the pump (29).

The front side surface of the second container (41) has an inflow port (42). The inflow port (42) is positioned to correspond to the second outflow port (38) of the first container (31). The inflow port (42) communicates with the total heat exchanger-containing space (33a) via the second outflow port (38) of the first container (31). The back side surface of the second container (41) has an outflow port (43). The outflow port (43) is formed behind the utilization heat exchanger (25). A flow path from the inflow port (42) to the outflow port (43) of the second container (41) forms a portion of the third flow path (P3).

### (3-4) Third Container

The third container (51) is housed in the casing (12). The third container (51) is located behind and adjacent to the second container (41). The third container (51) is disposed in a back portion of the casing (12). The third container (51) is made of styrene foam.

The third container (51) includes a body portion (51a) and duct fixing portions (51b). The body portion (51a) has a rectangular parallelepiped shape. The third container (51) is disposed in the casing (12) such that the longitudinal direction of the body portion (51a) corresponds to the right-to-left direction. The duct fixing portions (51b) protrude backward from the back side surface of the body portion (51a). The duct fixing portions (5 1b) are tubular. The third duct joints (C3) are each fixed to an associated one of the duct fixing portions (51b). The air supply fan (22) is disposed inside the third container (51).

The third container (51) has generally the same length in the right-to-left direction as that of the first container (31). In other words, the third container (51) has a shorter length in the right-to-left direction than the second container (41) does.

The front side surface of the third container (51) has a substantially rectangular inflow port (52). The inflow port (52) is positioned to correspond to the outflow port (43) of the second container (41). The inflow port (52) communicates with the internal space of the second container (41) via the outflow port (43) of the second container (41).

The back side surface of the third container (51) has outflow ports (53). The number of the outflow ports (53) of this example is five. The third duct joints (C3) are connected to the associated outflow ports (53). A flow path from the inflow port (42) of the third container (51) to the inlet end of the third duct joint (C3) forms a portion of the third flow path (P3).

### (3-5) Total Heat Exchanger

The total heat exchanger (21) corresponds to a first heat exchanger of the present disclosure. The total heat exchanger (21) is disposed in the total heat exchanger-containing space (33a) of the first container (31). The total heat exchanger (21) allows heat exchange between the air flowing through the air supply path (13) and the air flowing through the exhaust path (14). As schematically illustrated in FIG. 5, the total heat exchanger (21) has therein an air supply internal flow path (21a) and an exhaust internal flow path (21b). The air supply internal flow path (21a) and the exhaust internal flow path (21b) are orthogonal to each other.

An inflow portion of the air supply internal flow path (21a) is joined to the first flow path (P1). An outflow portion of the air supply internal flow path (21a) is joined to the third flow path (P3). An inflow portion of the exhaust internal flow path (21b) is joined to the fourth flow path (P4). An outflow portion of the exhaust internal flow path (21b) is joined to the second flow path (P2).

The total heat exchanger (21) transfers heat between air in the air supply internal flow path (21a) and air in the exhaust internal flow path (21b). The total heat exchanger (21) transfers moisture between air in the air supply internal flow path (21a) and air in the exhaust internal flow path (21b). As can be seen, the total heat exchanger (21) transfers latent heat and sensible heat between the air in the air supply internal flow path (21a) and the air in the exhaust internal flow path (21b).

The total heat exchanger (21) is placed such that the inflow surface of the exhaust internal flow path (21b) lies along the opening surface of the inside air inlet (15a). In other words, the air flowing through the exhaust internal flow path (21b) flows in a substantially vertical direction. The air flowing through the exhaust internal flow path (21b) flows upward from the bottom. The air flowing through the air supply internal flow path (21a) flows in a substantially horizontal direction. The air flowing through the air supply internal flow path (21a) flows backward from the front.

### (3-6) Filter

The ventilation unit (11) includes the filter (24). The filter (24) is disposed in the first flow path (P1). The filter (24) is disposed upstream of the total heat exchanger (21) in the air supply path (13). The filter (24) is disposed between the first inflow port (35) and the total heat exchanger (21) in the first container (31). The filter (24) collects dust in outdoor air (OA). The fourth flow path (P4) may include a filter.

### (3-7) Air Supply Fan

The air supply fan (22) is disposed in the third flow path (P3). The air supply fan (22) is housed inside the third container (51). The air supply fan (22) transfers air in the air supply path (13). The air supply fan (22) is a sirocco fan. The air supply fan (22) may be a turbo fan or a propeller fan.

The air supply fan (22) is driven by a first motor (M1). The number of revolutions of the first motor (M1) is variable. The first motor (M1) is a direct-current (DC) fan motor, the number of revolutions of which is adjustable. The air supply fan (22) is configured such that its volume of air is variable. The air supply fan (22) is fixed to the third container via a housing.

### (3-8) Exhaust Fan

The exhaust fan (23) is disposed in the second flow path (P2). The exhaust fan (23) is housed in the fan-containing space (34a) of the first container (31). The exhaust fan (23) transfers air in the exhaust path (14). The exhaust fan (23) is a sirocco fan. The exhaust fan (23) may be a turbo fan or a propeller fan.

The exhaust fan (23) is driven by a second motor (M2). The number of revolutions of the second motor (M2) is variable. The second motor (M2) is a DC fan motor, the number of revolutions of which is adjustable. The exhaust fan (23) is configured such that its volume of air is variable.

The second motor (M2) is fixed to a front portion, in the front-to-back direction, of the top plate (12a) of the casing (12). In other words, the second motor (M2) is fixed to an upper portion of the first container (31). The exhaust fan (23) is disposed below the second motor (M2).

### (3-9) Utilization Heat Exchanger

The utilization heat exchanger (25) corresponds to a second heat exchanger of the present disclosure. The utilization heat exchanger (25) is disposed in the third flow path (P3). The utilization heat exchanger (25) is disposed downstream of the total heat exchanger (21) in the air supply path (13). The utilization heat exchanger (25) is disposed between the air supply internal flow path (21a) and the air supply fan (22) in the third flow path (P3).

The utilization heat exchanger (25) is disposed in a left portion of the second container (41). The utilization heat exchanger (25) is inclined downward and backward. The utilization heat exchanger (25) is inclined 45 degrees relative to the vertical direction. An upper portion of the utilization heat exchanger (25) is supported by the upper surface of the second container (41). A lower portion of the utilization heat exchanger (25) is supported by the drain pan (28).

The utilization heat exchanger (25) allows heat exchange between the refrigerant flowing therethrough and the air flowing through the air supply path (13). The utilization heat exchanger (25) is a fin-and-tube air heat exchanger. The utilization heat exchanger (25) includes a large number of fins and a heat transfer tube (25a). The heat transfer tube (25a) extends in the direction of arrangement of the large number of fins. The refrigerant flows through the heat transfer tube (25a).

The utilization heat exchanger (25) in the cooling operation functions as an evaporator to cool air. The utilization heat exchanger (25) in the heating operation functions as a radiator (strictly speaking, a condenser) to heat air.

### (3-10) Refrigerant Pipe Joint

As illustrated in FIG. 4, the ventilation unit (11) includes the refrigerant pipe joints (27). The refrigerant pipe joints (27) correspond to joints of the present disclosure. The refrigerant pipe joints (27) are disposed on the right side of the first container (31) in the internal space (16) of the casing (12). The refrigerant pipe joints (27) are connectors that each connect the utilization heat exchanger (25) and the associated connection pipe (86, 87) together. The ventilation unit (11) includes a first refrigerant pipe joint (27a) and a second refrigerant pipe joint (27b).

The first refrigerant pipe joint (27a) connects the first connection pipe (86) and the heat transfer tube (25a) together. The second refrigerant pipe joint (27b) connects the second connection pipe (87) and the heat transfer tube (25a) together. The first and second refrigerant pipe joints (27a) and (27b) are arranged to protrude forward from the front side surface of the second container (41). The first and second refrigerant pipe joints (27a) and (27b) are fixed to a right portion of the front side surface. Specifically, the first and second refrigerant pipe joints (27a) and (27b) are fixed while passing through the front side surface of the second container (41).

### (3-11) Drain Pan

As illustrated in FIG. 5, the drain pan (28) is disposed above the bottom plate (12b) of the casing (12). The drain pan (28) is placed on the bottom plate (12b) of the casing (12). The drain pan (28) is disposed below the utilization heat exchanger (25). The drain pan (28) is disposed in a lower portion of the second container (41). The drain pan (28) closes the lower side of the second container (41). The drain pan (28) has a dish shape with its upper end open. The drain pan (28) receives condensed water generated around the utilization heat exchanger (25).

### (3-12) Pump

As illustrated in FIG. 4, the pump (29) is disposed inside the second container (41). The pump (29) is disposed above the drain pan (28). The pump (29) is disposed on the right side of the utilization heat exchanger (25). In other words, the pump (29) is disposed in a right portion of the internal space of the second container (41). The pump (29) drains water from the drain pan (28). The pump (29) sucks water from its bottom.

A drainpipe (29a) is connected to the pump (29) via a drain relay pipe (not shown) and a drainpipe joint (29b). The drainpipe (29a) is disposed outside the second container (41). The drain relay pipe connects an upper portion of the pump (29) and the drainpipe joint (29b) together. The drain relay pipe is disposed inside the second container (41).

The drainpipe joint (29b) is a connector that connects the drain relay pipe and the drainpipe (29a) together. The drainpipe joint (29b) is disposed in the internal space (16) of the casing (12). The drainpipe joint (29b) is fixed while passing through the front side surface of the second container (41). The drainpipe joint (29b) is disposed above the pump (29). The drainpipe joint (29b) is disposed above the first and second refrigerant pipe joints (27a) and (27b). The drainpipe (29a) is disposed on the right side of the first container (31) in the casing (12). Operation of the pump (29) causes water accumulated in the drain pan (28) to be sucked through the bottom of the pump (29) and drained out of the casing (12) through the drainpipe (29a).

### (4) Heat Source Unit

The heat source unit (80) illustrated in FIG. 2 is disposed in the outdoor space (6). The heat source unit (80) includes a heat source fan (81). The heat source unit (80) includes a compressor (82), a heat source heat exchanger (83), a switching mechanism (84), and an expansion valve (85) as components of the refrigerant circuit (R).

The compressor (82) compresses sucked refrigerant. The compressor (82) discharges the compressed refrigerant. The compressor (82) is, for example, a rotary compressor of an oscillating piston type, a rolling piston type, or a scroll type. The compressor (82) is of an inverter type.

The heat source heat exchanger (83) is a fin-and-tube air heat exchanger. The heat source heat exchanger (83) is an outdoor heat exchanger that allows heat exchange between the refrigerant flowing therethrough and outdoor air.

The heat source fan (81) is disposed near the heat source heat exchanger (83). The heat source fan (81) of this example is a propeller fan. The heat source fan (81) transfers air passing through the heat source heat exchanger (83).

The switching mechanism (84) changes the flow path of the refrigerant circuit (R) so as to switch between a first refrigeration cycle which is a cooling cycle and a second refrigeration cycle which is a heating cycle. The switching mechanism (84) is a four-way switching valve. The switching mechanism (84) has a first port (84a), a second port (84b), a third port (84c), and a fourth port (84d). The first port (84a) of the switching mechanism (84) is joined to the discharge portion of the compressor (82). The second port (84b) of the switching mechanism (84) is joined to the suction portion of the compressor (82). The third port (84c) of the switching mechanism (84) is joined to the gas-side end of the utilization heat exchanger (25) through the first connection pipe (86). The fourth port (84d) of the switching mechanism (84) is joined to the gas-side end of the heat source heat exchanger (83).

The switching mechanism (84) switches between a first state and a second state. The switching mechanism (84) in the first state (state indicated by solid lines in FIG. 3) causes the first port (84a) and the fourth port (84d) to communicate with each other, and causes the second port (84b) and the third port (84c) to communicate with each other. The switching mechanism (84) in the second state (state indicated by dashed lines in FIG. 3) causes the first port (84a) and the third port (84c) to communicate with each other, and causes the second port (84b) and the fourth port (84d) to communicate with each other.

The expansion valve (85) has one end joined to the liquid-side end of the heat source heat exchanger (83), and the other end joined to the liquid-side end of the utilization heat exchanger (25) via the second connection pipe (87). The expansion valve (85) is an electronic expansion valve having a variable opening degree.

### (5) Operation

Operation of the ventilation device (10) will be described with reference to FIG. 2. The ventilation device (10) switchably performs the cooling operation and the heating operation. In FIG. 2, the flow of the refrigerant in the cooling operation is indicated by solid arrows, and the flow of the refrigerant in the heating operation is indicated by dashed arrows.

### (5-1) Cooling Operation

In the cooling operation, the compressor (82) and the heat source fan (81) operate; the switching mechanism (84) is in the first state; and the opening degree of the expansion valve (85) is adjusted. In addition, in the cooling operation, the air supply fan (22) and the exhaust fan (23) operate.

In the cooling operation, the refrigerant circuit (R) performs the first refrigeration cycle. In the first refrigeration cycle, the heat source heat exchanger (83) functions as a radiator, and the utilization heat exchanger (25) functions as an evaporator.

Specifically, the refrigerant compressed by the compressor (82) flows through the heat source heat exchanger (83). In the heat source heat exchanger (83), the refrigerant dissipates heat to the outdoor air to condense. The refrigerant that has condensed in the heat source heat exchanger (83) is decompressed by the expansion valve (85), and then flows through the utilization heat exchanger (25). In the utilization heat exchanger (25), the refrigerant absorbs heat from the air in the air supply path (13) to evaporate. The refrigerant evaporated in the utilization heat exchanger (25) is sucked into the compressor (82).

In the ventilation unit (11) during the cooling operation, operation of the exhaust fan (23) causes room air (RA) to be taken into the fourth flow path (P4). Operation of the air supply fan (22) causes outdoor air (OA) to be taken into the first flow path (P1). The air in the first flow path (P1) flows through the air supply internal flow path (21a) of the total heat exchanger (21). The air in the fourth flow path (P4) flows through the exhaust internal flow path (21b) of the total heat exchanger (21).

For example, in summer, the indoor space (5) is cooled by another air conditioner (A) illustrated in FIG. 1. In this case, the room air (RA) has a lower temperature than the outdoor air (OA) does. In addition, the room air (RA) has a lower humidity than the outdoor air (OA) does. Thus, in the total heat exchanger (21), the air in the air supply internal flow path (21a) is cooled by the air in the exhaust internal flow path (21b). At the same time, the total heat exchanger (21) transfers moisture in the air in the air supply internal flow path (21a) to the air in the exhaust internal flow path (21b).

The air that has flowed out of the exhaust internal flow path (21b) into the second flow path (P2) flows through the exhaust duct (D2), and is exhausted to the outdoor space (6) as the exhaust air (EA).

The air cooled and dehumidified in the air supply internal flow path (21a) flows out into the third flow path (P3). This air is cooled by the utilization heat exchanger (25). The cooled air flows through the air supply ducts (D3), and is supplied to the indoor space (5) as the supply air (SA).

### (5-2) Heating Operation

In the heating operation, the compressor (82) and the heat source fan (81) operate; the switching mechanism (84) is in the second state; and the opening degree of the expansion valve (85) is adjusted. In addition, in the heating operation, the air supply fan (22) and the exhaust fan (23) operate.

In the heating operation, the refrigerant circuit (R) performs the second refrigeration cycle. In the second refrigeration cycle, the utilization heat exchanger (25) functions as a radiator, and the heat source heat exchanger (83) functions as an evaporator.

Specifically, the refrigerant compressed by the compressor (82) flows through the utilization heat exchanger (25). In the utilization heat exchanger (25), the refrigerant dissipates heat to the room air to condense. The refrigerant that has condensed in the utilization heat exchanger (25) is decompressed by the expansion valve (85), and then flows through the heat source heat exchanger (83). In the heat source heat exchanger (83), the refrigerant absorbs heat from the outdoor air and evaporates. The refrigerant evaporated in the heat source heat exchanger (83) is sucked into the compressor (82).

For example, in winter, the indoor space (5) is heated by another air conditioner (A) illustrated in FIG. 1. In this case, the room air (RA) has a higher temperature than the outdoor air (OA) does. In addition, the room air (RA) has a higher humidity than the outdoor air (OA) does. Thus, in the total heat exchanger (21), the air in the air supply internal flow path (21a) is heated by the air in the exhaust internal flow path (21b). At the same time, the total heat exchanger (21) transfers moisture in the air in the exhaust internal flow path (21b) to the air in the air supply internal flow path (21a).

The air that has flowed out of the exhaust internal flow path (21b) into the second flow path (P2) flows through the exhaust duct (D2), and is exhausted to the outdoor space (6) as the exhaust air (EA).

The air heated and humidified in the air supply internal flow path (21a) flows out into the third flow path (P3). This air is heated by the utilization heat exchanger (25). The heated air flows through the air supply ducts (D3), and is supplied to the indoor space (5) as the supply air (SA).

### (6) Arrangement Relation Between Utilization Heat Exchanger and Other Components

The arrangement relation between the utilization heat exchanger (25) and other components will be described in detail.

### (6-1) Relation Between Utilization Heat Exchanger and Total Heat Exchanger

The total heat exchanger (21) and the utilization heat exchanger (25) are arranged in a first direction along the bottom plate (12b) serving as the lower surface (first surface) of the casing (12). Strictly speaking, the first direction is a direction from the first side plate (12c) toward the second side plate (12d). The first side plate (12c) is a side surface of the casing (12) having the outside air inlet (o1). The second side plate (12d) is a side surface of the casing (12) having the air supply ports (o3). The first direction in this example corresponds to the front-to-back direction among the horizontal directions.

As illustrated in FIGS. 4, 5, and 7, the total heat exchanger (21) overlaps with the utilization heat exchanger (25) when viewed in the first direction. In FIG. 7, an air supply outflow surface (21c) of the total heat exchanger (21) is indicated by the two-dot-dash line, and an inflow surface (25b) of the utilization heat exchanger (25) is indicated by the dash-dot line.

The air supply outflow surface (21c) is a ventilation surface of the total heat exchanger (21) from which air in the air supply internal flow path (21a) flows out. The total heat exchanger (21) of this example has a rectangular parallelepiped shape with six faces. The air supply outflow surface (21c) corresponds to the vertical back face of the total heat exchanger (21).

The inflow surface (25b) of the utilization heat exchanger (25) is a ventilation surface of the utilization heat exchanger (25) through which air flows into the utilization heat exchanger (25). Specifically, the inflow surface (25b) is formed between both right and left end parts (right and left end plates) of the front side face of the utilization heat exchanger (25).

The arrangement of the total heat exchanger (21) and the utilization heat exchanger (25) so as to overlap with each other in the first direction can lower the height of the casing. This can make the horizontal ventilation device more compact in the top-to-bottom direction.

In addition, the total heat exchanger (21) and the utilization heat exchanger (25) overlapping with each other in the first direction can reduce an uneven flow of air flowing into the utilization heat exchanger (25). This is because air tends to flow out from the entire air supply outflow surface (21c) of the total heat exchanger (21) equally.

As illustrated in FIG. 7, the height of the total heat exchanger (21) is defined as h1. The height of the portion where the total heat exchanger (21) and the utilization heat exchanger (25) overlap with each other when viewed in the first direction (toward the paper plane of FIG. 7) is defined as ha. In this case, according to this embodiment, the height ha is 60% or more of the height h1. As can be seen, it is possible to lower the vertical height of the casing (12) by increasing the region where the total heat exchanger (21) and the utilization heat exchanger (25) overlap with each other in the height direction.

The air supply outflow surface (21c) of the total heat exchanger (21) faces the inflow surface (25b) of the utilization heat exchanger (25). As described above, air tends to flow out from the air supply outflow surface (21c) equally. Thus, the air supply outflow surface (21c) set to face the inflow surface (25b) can reduce an uneven flow of air in the inflow surface (25b) of the utilization heat exchanger (25).

When viewed from a second direction perpendicular to the air supply outflow surface (21c), the air supply outflow surface (21c) and the inflow surface (25b) overlap with each other with a space therebetween. Here, in this example, the air supply outflow surface (21c) is the vertical back surface. Thus, the second direction coincides with the first direction (the front-to-back direction). As can be seen, the air supply outflow surface (21c) and the inflow surface (25b) overlapping with each other in the second direction allow the air that has flowed out of the air supply outflow surface (21c) to be delivered directly to the inflow surface (25b). It is thus possible to reduce an uneven flow of the air flowing into the utilization heat exchanger (25).

As illustrated in FIGS. 4, 5, and 7, when viewed from the second direction (in this example, corresponding to the first direction), the area where the projected surface of the air supply outflow surface (21c) and the projected surface of the inflow surface overlap with each other is 1/2 or more of the area of the air supply outflow surface (21c). This increases the proportion of the air which has flowed out of the air supply outflow surface (21c) and which is delivered directly to the inflow surface (25b). It is thus possible to reduce an uneven flow of the air flowing into the utilization heat exchanger (25).

As illustrated in FIG. 7, the inflow surface (25b) of the utilization heat exchanger (25) has a larger area than the air supply outflow surface (21c) does. Hence, the flow path of the air that has flowed out of the air supply outflow surface (21c) can be kept from being narrower in the utilization heat exchanger (25). It is thus possible to keep the pressure loss in the air supply path (13) from decreasing due to a narrower flow path of the utilization heat exchanger (25).

### (6-2) Relation Between Utilization Heat Exchanger and Exhaust Fan

As illustrated in FIG. 5, the exhaust fan (23) is disposed along the upper surface of the total heat exchanger (21). The exhaust fan (23) overlaps with the total heat exchanger (21) in the top-to-bottom direction. The exhaust fan (23) is transversely arranged such that the axis of its second motor (M2) extends in the top-to-bottom direction. Thus, the casing (12) can be compact in the top-to-bottom direction.

The exhaust fan (23) overlaps with the utilization heat exchanger (25) when viewed in the first direction. Strictly speaking, the utilization heat exchanger (25) overlaps with both the exhaust fan (23) and the total heat exchanger (21) when viewed in the first direction. Thus, the casing (12) can be compact in the top-to-bottom direction.

### (6-3) Configuration of Air Supply Path

As schematically indicated by the dash-dot arrow X in each of FIGS. 5 and 6, the air supply path (13) of this example extends linearly in the first direction through the outside air inlet (o1), the total heat exchanger (21), the utilization heat exchanger (25), the air supply fan (22), and the air supply port (o3). The air supply internal flow path (21a) of the total heat exchanger (21) extends in the first direction. The first direction of this example is the front-to-back direction. Thus, the air supply path (13) of this example forms a linear flow path that does not bend from the outside air inlet (o1) to the air supply port (o3). This can lower the pressure loss in the long air supply path (13).

When viewed in the first direction, the outside air inlet (o1), the air supply internal flow path (21a) of the total heat exchanger (21), the utilization heat exchanger (25), the air supply fan (22), and the air supply port (o3) overlap with one another in the first direction. Thus, the casing (12) can be compact in the top-to-bottom direction.

### (7) Relation Between Exhaust Inflow Surface and Inside Air Inlet

As illustrated in FIG. 5, an exhaust inflow surface (21d) of the total heat exchanger (21) is located along the inside air inlet (o4). The exhaust inflow surface (21d) as used herein is a ventilation surface through which air to be introduced into the exhaust internal flow path (21b) of the total heat exchanger (21) flows in. The exhaust inflow surface (21d) corresponds to the horizontal lower face of the total heat exchanger (21). As can be seen, positioning the exhaust inflow surface (21d) along the inside air inlet (o4) can shorten the length of the flow path from the inside air inlet (o4) to the exhaust inflow surface (21d) in the top-to-bottom direction. Thus, the casing (12) can be compact in the top-to-bottom direction.

### (8) Features

(8-1) The total heat exchanger (21) overlaps with the utilization heat exchanger (25) when viewed in the front-to-back direction, which is the first direction. This can reduce the height of the casing (12) in the top-to-bottom direction. Further, it is possible to reduce an uneven flow of the air flowing into the utilization heat exchanger (25). This can increase the area of substantial heat transfer between air and the refrigerant in the utilization heat exchanger (25).

(8-2) The total heat exchanger (21) has the exhaust inflow surface (21d) through which air in the exhaust path (14) flows in. The exhaust inflow surface (21d) is located along the inside air inlet (o4). This can shorten the length of the flow path from the inside air inlet (o4) to the exhaust inflow surface (21d) in the top-to-bottom direction. As a result, the height of the casing (12) in the top-to-bottom direction can be reduced.

(8-3) The air supply outflow surface (21c) of the total heat exchanger (21) faces the inflow surface (25b) of the utilization heat exchanger (25). For example, if the air supply fan (22) is disposed between the air supply outflow surface (21c) and the utilization heat exchanger (25), air blown out of the air supply fan (22) tends to flow locally on part of the inflow surface (25b). In contrast, the air supply outflow surface (21c) of the total heat exchanger (21) tends to allow air to flow out of its entire region uniformly. Thus, the total heat exchanger (21) and the air supply outflow surface (21c) set to face each other can effectively reduce an uneven flow of air in the inflow surface (25b).

(8-4) When viewed from the second direction perpendicular to the air supply outflow surface (21c), the air supply outflow surface (21c) and the inflow surface (25b) overlap with each other with a space therebetween. This facilitates delivering the air flowing out of the air supply outflow surface (21c) directly to the inflow surface (25b). As a result, it is possible to reduce an uneven flow in the inflow surface (25b).

(8-5) When viewed from the second direction, the area where the projected surface of the air supply outflow surface (21c) and the projected surface of the inflow surface (25b) overlap with each other is 1/2 or more of the area of the air supply outflow surface (21c). This facilitates delivering the air flowing out of the air supply outflow surface (21c) directly to the inflow surface (25b). As a result, it is possible to reduce an uneven flow in the inflow surface (25b).

(8-6) When viewed in the first direction, the height ha of a portion where the first and second heat exchangers (21) and (25) overlap with each other is 60% or more of the height h1 of the first heat exchanger (21). This can further reduce the height of the casing (12) in the top-to-bottom direction.

(8-7) The air supply path (13) extends linearly in the first direction through the outside air inlet (o1), the total heat exchanger (21), the utilization heat exchanger (25), the air supply fan (22), and the air supply port (o3). This can reduce the entire length of the air supply path (13). Bending of the air flow can also be reduced. As a result, the pressure loss in the air supply path (13) can be lowered, and the power required for the air supply fan (22) can be reduced.

(8-8) The exhaust fan (23) overlaps with the utilization heat exchanger (25) when viewed in the first direction. Strictly speaking, the exhaust fan (23) and the total heat exchanger (21) are arranged one above the other, and both overlap with the utilization heat exchanger (25) in the first direction. This can lower the height of the casing (12) in the top-to-bottom direction.

### (9) Variations

The foregoing embodiment may be modified as the following variations. In the following description, differences from the embodiment will be described in principle.

### (9-1) First Variation: Air Supply Path

It is recommended that the air supply path (13) extend linearly in the first direction through the outside air inlet (o1), the total heat exchanger (21), and the utilization heat exchanger (25). In this case, the air supply path (13) does not have to overlap with the air supply port (o3) and the air supply fan (22) linearly in the first direction.

The air supply path (13) may extend linearly in the first direction through the outside air inlet (o1), the total heat exchanger (21), the utilization heat exchanger (25), and the air supply fan (22). In this case, the air supply path (13) does not have to overlap with the air supply port (o3) linearly in the first direction.

The pressure loss in the air supply path (13) can be lowered by this configuration as well. The casing (12) can be shortened in the top-to-bottom direction.

### (9-2) Second Variation: Relation Between Air Supply Outflow Surface and Inflow Surface

In the above-described embodiment, the air supply outflow surface (21c) of the total heat exchanger (21) and the inflow surface (25b) of the utilization heat exchanger (25) may face each other while being parallel to each other. The air supply outflow surface (21c) and the inflow surface (25b) merely needs to face each other to form an angle of 45° or less relative to each other.

The entire air supply outflow surface (21c) of the total heat exchanger (21) may overlap with the inflow surface (25b) of the utilization heat exchanger (25) in the first direction.

The above-described height ha may be 80% or more of the height h1, or may be 100% thereof.

### «Other Embodiments»

The foregoing embodiment and variations thereof may be modified as follows.

The first heat exchanger (21) may be a sensible heat exchanger that transfers only sensible heat between the air flowing through the air supply path (13) and the air flowing through the exhaust path (14).

The switching mechanism (84) is not necessarily the four-way switching valve. The switching mechanism (84) may be a combination of four flow paths and on-off valves that open and close these four flow paths, or may be a combination of two three-way valves.

The expansion valve (26) is not necessarily the electronic expansion valve, and may be a temperature-sensitive expansion valve or a rotary expansion mechanism.

A plurality of air supply ducts (D3) may be connected to a plurality of air supply paths (13). In this case, the outlet ends of the plurality of air supply paths (13) are joined to one indoor space (5) or a plurality of indoor spaces (5). Each of the air supply ducts (D3) may include one main pipe joined to the air supply path (13) and a plurality of branch pipes branching from the main pipe. In this case, the outlet ends of the branch pipes communicate with one indoor space (5) or the plurality of indoor spaces (5).

While the embodiment and variations thereof have been described above, it will be understood that various changes in form and details may be made without departing from the spirit and scope of the claims. The embodiment, the variations thereof, and the other embodiments may be combined and replaced with each other without deteriorating intended functions of the present disclosure.

The ordinal numbers such as "first," "second," "third," ..., described above are used to distinguish the terms to which these expressions are given, and do not limit the number and order of the terms.

### INDUSTRIAL APPLICABILITY

As can be seen from the foregoing description, the present disclosure is useful for a ventilation device.

### DESCRIPTION OF REFERENCE CHARACTERS

- o1: Outside Air Inlet
- o3: Air Supply Port
- o4: Inside Air Inlet
- 5: Indoor Space
- 10: Ventilation Device
- 12: Casing
- 12b: First Surface
- 13: Air Supply Path
- 14: Exhaust Path
- 21: First Heat Exchanger
- 21c: Air Supply Outflow Surface
- 21d: Exhaust Inflow Surface
- 22: Air Supply Fan
- 23: Exhaust Fan
- 25: First Heat Exchanger
- 25: Second Heat Exchanger
- 25b: Inflow Surface

## Claims

1. A ventilation device comprising:
a casing (12) having an air supply path (13) through which outdoor air is supplied into a room, and an exhaust path (14) through which room air is exhausted to an outside of the room;
a first heat exchanger (21) configured to allow heat exchange between air flowing through the air supply path (13) and air flowing through the exhaust path (14); and
a second heat exchanger (25) disposed downstream of the first heat exchanger (21) in the air supply path (13),
the first and second heat exchangers (21) and (25) being arranged in a first direction along a first surface (12b), the first surface (12b) being a lower surface of the casing (12),
the first heat exchanger (21) overlapping with the second heat exchanger (25) when viewed in the first direction.

2. The ventilation device of claim 1, wherein
the first surface (12b) has an inside air inlet (o4) through which the room air is introduced into the exhaust path (14),
the first heat exchanger (21) has an exhaust inflow surface (21d) through which air in the exhaust path (14) flows in, and
the exhaust inflow surface (21d) is located along the inside air inlet (o4).

3. The ventilation device of claim 1 or 2, wherein
the first heat exchanger (21) has an air supply outflow surface (21c) through which air in the air supply path (13) flows out,
the second heat exchanger (25) has an inflow surface (25b) into which air flows, and
the air supply outflow surface (21c) faces the inflow surface (25b).

4. The ventilation device of any one of claims 1 to 3, wherein
when viewed from a second direction perpendicular to the air supply outflow surface (21c), the air supply outflow surface (21c) and the inflow surface (25b) overlap with each other with a space therebetween.

5. The ventilation device of claim 4, wherein
when viewed from the second direction, an area where a projected surface of the air supply outflow surface (21c) and a projected surface of the inflow surface (25b) overlap with each other is 1/2 or more of an area of the air supply outflow surface (21c).

6. The ventilation device of any one of claims 1 to 5, wherein
when viewed in the first direction, a height ha of a portion where the first and second heat exchangers (21) and (25) overlap with each other is 60% or more of a height h1 of the first heat exchanger (21).

7. The ventilation device of any one of claims 1 to 6, wherein
the inflow surface (25b) has a larger area than the air supply outflow surface (21c) does.

8. The ventilation device of any one of claims 1 to 7, wherein
the casing (12) has an outside air inlet (o1) through which the outdoor air is introduced into the air supply path (13), and
the air supply path (13) extends linearly in the first direction through the outside air inlet (o1), the first heat exchanger (21), and the second heat exchanger (25).

9. The ventilation device of claim 8 further comprising:
an air supply fan (22) configured to transfer air in the air supply path (13), wherein
the air supply path (13) extends linearly in the first direction through the outside air inlet (o1), the first heat exchanger (21), the second heat exchanger (25), and the air supply fan (22).

10. The ventilation device of claim 9, wherein
the casing (12) has an air supply port (o3) through which air in the air supply path (13) is supplied to an indoor space (5), and
the air supply path (13) extends linearly in the first direction through the outside air inlet (o1), the first heat exchanger (21), the second heat exchanger (25), the air supply fan (22), and the air supply port (o3).

11. The ventilation device of any one of claims 1 to 10 further comprising:
an exhaust fan (23) configured to transfer air in the exhaust path (14), wherein
the exhaust fan (23) overlaps with the second heat exchanger (25) when viewed in the first direction.
